# EUROPEAN PATENT APPLICATION

(11) **EP 4 349 925 A1**
(43) Date of publication of application: **10.04.2024**
(21) Application number: 23187322.5
(22) Date of filing: 24.07.2023
(51) Int. Cl.: C09D 5/08, B05D 3/00, B05D 5/08, C09D 183/00, C23C 8/02, G04B 37/22, C09D 185/00, C09D 183/04, B05D 3/02, B05D 3/06

(54) **METHOD FOR PRODUCING AN ARTICLE COMPRISING A COLOURED ABRASION RESISTANT COATING, AND ARTICLE COMPRISING SUCH A COATING**

(30) Priority: 06.10.2022 EP 22200123
(71) Applicant: ETA SA Manufacture Horlogère Suisse, 2540 Grenchen (CH)
(72) Inventor: PARTOVI NIA, Raheleh, 2540 Grenchen (CH)
(74) Representative: ICB SA

(57) **Abstract**

The present invention discloses a method for producing an article comprising a substrate and a coloured abrasion resistant coating present on at least part of a surface of the substrate, the method comprising providing a substrate comprising a metallic element and/or an alloy of a metallic element, and/or a polymer; providing a first compound comprising a functional group R¹ selected from the group consisting of C₁-C₂₀ alkyl, C₁-C₂₀ cycloalkyl, C₁-C₁₀ aryl and epoxy, and optionally comprises at least one halogen atom, and a second compound comprising a cross-linkable functional group selected from the group consisting of a (meth)acrylate, an ester, a mercapto, a vinyl, and a (meth)acrylated urethane; hydrolysing the first and the second compound; condensing the hydrolysed first and second compound, thereby obtaining a pre-polymer; adding a colorant to the pre-polymer; applying the pre-polymer to at least part of a surface of the substrate; and inducing cross-linking of the cross-linkable functional group by exposing the pre-polymer to one or more of a temperature up to 250 °C, UV radiation or IR radiation, thereby obtaining an article comprising a substrate and a coloured abrasion resistant coating covering at least part of a surface of the substrate; the coloured abrasion resistant coating being a cross-linked inorganic organic hybrid coating comprising at least one functional group R¹, and the cross-linked inorganic organic hybrid coating being covalently bonded to the substrate.

## Description

### Technical field of the invention

The present invention relates to a method for producing an article comprising a substrate and a coloured abrasion resistant coating on at least a portion of the substrate's surface. The present invention further relates to such articles.

### Background

Protective coatings which improve the lifetime of the article or product are gaining more and more interest. For example, the lifetime of a product can be improved by providing a durable coating on the surface areas prone to wear, such as wear by abrasion or exposure to harsh environments (humidity, temperature).

Such protective coatings can be, depending on the application or use of the article they are protecting, abrasion resistant, corrosion inhibiting, water repellent, oil repellent, anti-fingerprint, UV-resistant, or can have a certain hardness.

Further, decorative coatings are nowadays also used in a wide range of applications. In particular, protective coatings which are also decorative, or decorative coatings which also imply a certain degree of protection, are gaining interest, as they allow to manufacture attractive products having an improved performance and/or durability.

An example of a decorative coating is a coloured coating. Coloured coatings can be transparent, translucent or opaque. Coloured coatings allow to replace the use of coloured parts, which can be expensive. For example, in the watch industry, black components can be used, such as components made of carbon fibres, black ceramics or layered carbon, but such components typically expensive.

It is known to deposit a coloured protective coating on the surface of a substrate, such as titanium or steel, by means of DLC and PVD processes. A disadvantage of such methods is the requirement of working in a controlled environment to avoid contamination, for example by working in a glovebox filled with an inert gas, or by working at reduced pressure. Consequently, such methods are complex and expensive. Further, the precursors used in such processes are often considered toxic and/or not environmentally friendly.

In recent years, coatings obtained by means of a sol-gel process have become interesting. Sol-gel coatings are desirable for their environmental friendliness, high performance, compatibility with existing coating application technologies and for the on-demand simplicity of tailoring the coating properties.

In particular, inorganic organic hybrid coatings, such as those known under the registered trademark Ormocer, obtained by means of a sol-gel process have gained interest. Such coatings have the potential to combine the inherent properties of inorganic materials with those of organic polymers. Inorganic-organic hybrid materials may achieve features that the pure inorganic or organic material cannot give. Generally, organic polymeric materials have a good elasticity, tenacity, shape-ability, and have a rather low density, while inorganic materials are typically hard, stiff and thermally stable. With inorganic organic hybrid coatings, it is possible to vary and optimise the properties of the inorganic organic hybrid coating by varying the inorganic and the organic structural units. Due to their inorganic network, inorganic organic hybrid polymers are capable to exhibit a high mechanical, chemical and thermal stability in harsh environments.

Inorganic organic hybrid coatings are characterized by a direct linkage, i.e. a linkage on molecular scale, between the inorganic structural units and the organic structural units. The inorganic organic hybrid coatings are thus a polymer with three-dimensional inorganic and three-dimensional organic networks interconnected with covalent bonds.

The sol-gel process is a method for producing solid materials from small molecules, and is considered a sustainable and non-toxic technique. The process involves conversion of monomers into a colloidal solution (sol) that acts as a precursor for an integrated network (or gel) of either discrete particles or network polymers (cross-linked polymers).

'Characteristics of colored inorganic-organic hybrid materials', K. Wojtach, M. Laczka, et al., Journal of Non-Crystalline Solids 2007, volume 353, issues 18-21, pages 2099-2103, discloses coloured inorganic organic hybrid coatings applied to a glass substrate by means of a sol-gel process. The coatings are obtained from phenyltriethoxysilane (PhTES), 3-glycidoxypropyltrimethoxysilane (GPTMS), aluminium tri-sec-butylate (TBA) and dyes based on metal complexes, which are added to the polymer matrix. The coloured inorganic organic hybrid coatings show a good chemical resistance and a good colour stability. The coloured glass is still transparent.

EP 0486469 discloses an abrasion-resistant coating composition comprising an organoalkoxysilane and a hydrolyzable compound of a metal such as titanium or zirconium. The composition may further comprise a pigment or a blend of pigments in order to form a non-porous durable paint. The inorganic organic hybrid polymers are obtained by means of a sol-gel method, and can be applied to the surface of a plastic substrate.

A disadvantage of the abovementioned inorganic organic hybrid coatings is that several colorants are considered toxic, in particular dyes based on metal complexes. This typically limits the amount of colorant that can be used, which may impact the homogeneity and saturation of the coating, leading to coloured articles considered of inferior quality. Toxic chemicals also limit the final application or use of the coloured articles obtained, as contact with for example the environment or the skin may need to be avoided.

WO2010/001949 discloses a method for producing a transparent conductive film having good adhesion and abrasion resistant properties to a substrate. A coating composition is applied to a surface of a substrate and cured. The coating composition comprises a condensate of a silane having an alkoxy group, organic polymer fine particles comprising a copolymer containing a monomer unit having an UV absorbing group, colloidal silica, a curing catalyst and a dispersion medium. A colouring agent can be added as an additive to the hydrolysis condensate of the organoalkoxysilane.

US2015/0315390 discloses an abrasion resistant anti-limescale layer and coating compositions. A coating composition is applied to a surface of a substrate and hardened. The coating composition comprises an inorganic condensate, obtained from an organoalkoxysilane which is hydrolysed and condensed, and an organic monomer, oligomer or polymer, which comprises at least one polymerisable group. A colorant can be added after the hydrolysis and/or condensation of the organoalkoxysilane.

EP0486469 discloses an organic-inorganic hybrid polymer for abrasion resistant coatings. The organic-inorganic hybrid polymer is obtained by condensing a partially hydrolysed organoalkoxysilane with a hydrolysable metal alkoxyde (in particular zirconium or titanium), thereby obtaining an inorganic/organic oxide network, followed by adding water for full hydrolysis whereas the condensation proceeds, thereby obtaining the coating composition. Pigments can be added to the coating composition. After application of the coating composition to a substrate, curing is performed, thereby obtaining the coating.

### Summary of the invention

The present invention aims to overcome one or more of the above drawbacks. It is an aim of the invention to provide a method for producing an article comprising a substrate and a coloured abrasion resistant coating, wherein the method is performed at moderate temperatures and does not require long treatment times. In other words, it is an aim to provide methods having a reduced energy consumption compared to the methods of the prior art. It is a further aim to provide a method that does not require the use of harsh or toxic components, thereby providing methods having a lower environmental impact and providing articles that can be used in a wider range of applications.

It is a further aim of the invention to provide an article comprising a substrate comprising a coloured abrasion resistant coating, in particular coatings having an excellent adhesion to the substrate. It is a further aim to provide an article comprising a substrate and a coating, wherein the coating improves the lifetime and/or the durability of the substrate. It is a further aim to provide an article wherein the coating provides the substrate, in addition to a colour, with at least one of an excellent an excellent abrasion resistance, corrosion protection, or an excellent hardness.

According to a first aspect of the invention, there is disclosed a method for producing an article comprising a substrate and a coloured abrasion resistant coating present on at least part of a surface of the substrate as set out in the appended claims.

The method comprises providing a substrate. The substrate comprises a metallic element and/or an alloy of a metallic element, and/or a polymer. For example, the substrate can be a metallic substrate, such as copper, an alloy, such as a copper alloy (e.g. brass), a polymer, such as methacrylate acrylonitrile butadiene styrene (MABS), or a composite comprising both a polymer and a metallic element or alloy thereof. For example, a composite can comprise a polymer matrix reinforced with metallic elements, such as metallic fibres or wires.

The method further comprises providing a first compound according to formula (I) 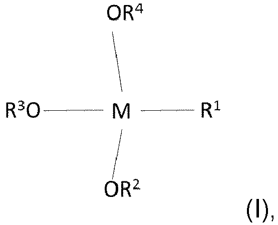 wherein
M is silicon or titanium,
R¹ is a group comprising one or more functional groups selected from the group consisting of C₁-C₂₀ alkyl, C₁-C₂₀ cycloalkyl, C₁-C₁₀ aryl, amide, amine, mercapto, (meth)acrylate, and epoxy, and
R², R³ and R⁴ are each independently from each other H, a C₁-C₂₀ alkyl, a C₁-C₁₀ aryl, C₁-C₂₀ alkenyl, C₁-C₂₀ alkylaryl, or C₁-C₂₀ arylalkyl.

The method further comprises providing a second compound according to formula (II) 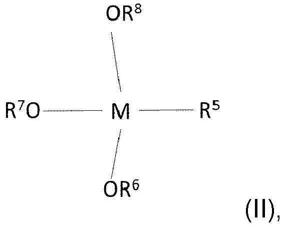 wherein
M is silicon or titanium,
R⁵ is a cross-linkable functional group, and
R⁶, R⁷, and R⁸ are each independently from each other H, a C₁-C₂₀ alkyl, a C₁-C₁₀ aryl, C₁-C₂₀ alkenyl, C₁-C₂₀ alkylaryl, or C₁-C₂₀ arylalkyl.

Optionally, R¹ comprises at least one halogen atom. Advantageously, the halogen atom is fluorine, chlorine, bromine, or iodine.

Advantageously, R¹ and R⁵ are different, i.e. the first compound and the second compound are advantageously different.

According to an embodiment, R¹ is a group comprising an epoxy functional group.

According to another embodiment, R¹ is a C₁-C₂₀ alkyl, i.e. an alkyl having between 1 and 20 carbon atoms in its chain. Advantageously, when R¹ comprises a halogen atom, R¹ is a C₁-C₂₀ alkyl having the formula - (CH₂)ₓ(CF₂)_{y}CF₃, wherein x is between 0 and z-1, y is z-x-1, and z is the total number of carbon atoms, i.e. z is between 1 and 20. For example, when R¹ is C₈ alkyl, i.e. z is 8, it can have the formula -(CH₂)₂(CF₂)₅CF₃ (x being 2 and y being 5).

With "cross-linkable functional group" is meant in the light of the present disclosure a functional group which is capable of reacting with other functional groups. Upon reaction, covalent bonds are formed, thereby realising a cross-linked polymer. A cross-linked polymer can be considered as a polymer having a three dimensional structure.

Advantageously, R⁵ is a thermo-cross-linkable group and/or a photo-cross-linkable group. In other words, R⁵ can be thermo-cross-linkable, photo-cross-linkable, or both.

With a "thermo-cross-linkable group" is meant in the light of the present disclosure that cross-linking of R⁵ is induced and/or takes place by thermal cross-linking, also named thermal curing. Thermal curing is performed by exposing the (thermo-)cross-linkable group, and in the present disclosure thus the pre-polymer comprising such a cross-linkable group, to an elevated temperature, i.e. by heating the pre-polymer.

With a "photo-cross-linkable group" is meant in the light of the present disclosure that cross-linking of R⁵ is induced and/or takes place by photochemical cross-linking, also named photochemical curing. Photochemical curing is performed by exposing the (photo-)cross-linkable group, and in the present disclosure thus the pre-polymer comprising such a cross-linkable group to a radiation. Advantageously, the radiation comprises one or more of infrared (IR) radiation, ultraviolet (UV) radiation, or radiation with light having a wavelength in the wavelength range of visible light (VIS).

Advantageously, R⁵ is a functional group selected from the group consisting of an epoxy, a (meth)acrylate, an ester, a mercapto, a vinyl, and a (meth)acrylated urethane. Preferred functional groups are selected from the group consisting of a (meth)acrylate, an ester, a mercapto, a vinyl, and a (meth)acrylated urethane. With "(meth)acrylate" is meant in the present disclosure that the functional group can be an acrylate or a methacrylate.

Advantageously, R², R³, R⁴, R⁶, R⁷, and R⁸ are each independently from each other H or C₁-C₂₀ alkyl, preferably C₁-C₈ alkyl, more preferably C₁-C₆ alkyl, most preferably C₁-C₄ alkyl. In particular, R², R³, R⁴, R⁶, R⁷, and R⁸ are each independently methyl (-CH₃, i.e. C₁ alkyl)), or ethyl (-C₂H₅, i.e. C₂ alkyl).

The method further comprises hydrolysing the first compound and the second compound in the presence of water. Upon hydrolysis, the C₁-C₈ alkyl chain of any one of R², R³, R⁴, R⁶, R⁷, and R⁸ is converted into or reacts with the formation of a hydrogen atom, thereby forming hydroxyl groups. The hydrolysis reaction also produces alcohol molecules of formula CₓH₂ₓ₊₁OH, wherein x is the number of carbon atoms in the C₁-C₈ alkyl chain of R², R³, R⁴, R⁶, R⁷, and R⁸ (i.e. x is between 1 and 8).

The method further comprises condensing the hydrolysed first compound and the hydrolysed second compound. With "condensing the hydrolysed first compound and the hydrolysed second compound" is meant in the present disclosure that both hydrolysed compounds are condensed together, i.e. one condensation reaction is performed. Upon condensation, water molecules are formed and removed. A pre-polymer is obtained from the hydrolysed first compound and the hydrolysed second compound. The pre-polymer comprises R¹ and R⁵ as functional groups. The pre-polymer can be considered a so-called "sol".

The method further comprises adding a colorant to the pre-polymer. Advantageously, the colorant dissolves or disperses at least partially in the pre-polymer.

Advantageously, the colorant comprises or substantially consists of one or more of carbon black, copper(II) phthalocyanine, or a triphenyl methane based colorant.

Advantageously, the colorant comprises or substantially consists of (e.g. is) a particulate compound. In other words, the colorant advantageously comprises or substantially consists of particles. Advantageously, the particles have an average diameter of 500 nm or less, preferably 250 nm or less, more preferably 100 nm or less, such as 50 nm or less. Advantageously, the particles have an average diameter between 1 nm and 500 nm, such as between 2 nm and 250 nm, preferably between 5 nm and 100 nm, more preferably between 10 nm and 50 nm, for example 25 nm.

Advantageously, the colorant is added so that the pre-polymer comprising the colorant comprises between 0.1 % and 50 % by weight of the colorant, preferably between 0.5 % and 30 % by weight, more preferably between 1 % and 25 % by weight, based on the total weight of the pre-polymer comprising the colorant.

The pre-polymer is applied to at least part of a surface of the substrate. The application can be done by methods known in the art, for example casting or dipping the substrate into the pre-polymer, spraying or electrospraying the pre-polymer onto the substrate, bar coating, or roll-to-roll coating.

Advantageously, the substrate is pre-treated prior to applying the pre-polymer to at least a part thereof (so-called pre-treatment). Advantageously, at least the part of the surface of the substrate to which the pre-polymer is to be applied is pre-treated. Advantageously, the substrate is pre-treated by means of deposition of silicon oxide.

The method further comprises crosslinking of the pre-polymer applied to at least part of the surface of the substrate. Advantageously, the pre-polymer is cross-linked by means of cross-linking of the cross-linkable functional group R⁵.

When R⁵ is a thermo-cross-linkable functional group, the cross-linking is advantageously induced and/or performed by exposing the pre-polymer to a temperature up to 250 °C, advantageously a temperature between 25 °C and 250 °C, preferably between 30 °C and 200 °C, more preferably between 40 °C and 150 °C, such as between 50 °C and 100 °C.

When R⁵ is a photo-cross-linkable functional group, the cross-linking is advantageously induced and/or performed by exposing the pre-polymer to radiation. Advantageously, the radiation is IR radiation or UV radiation, or a combination thereof.

When R⁵ is a thermo-cross-linkable and a photo-cross-linkable functional group, the cross-linking is advantageously induced and/or performed by exposing the pre-polymer to a temperature up to 250 °C and to radiation.

Upon cross-linking of the pre-polymer, an article comprising the substrate and a coloured abrasion resistant coating covering at least part of a surface of the substrate is obtained. The coloured abrasion resistant coating comprising at least one functional group R¹ (a so-called "gel"). The coloured abrasion resistant coating is a cross-linked inorganic organic hybrid coating. The cross-linked inorganic organic hybrid coating is covalently bonded to the metallic element or the alloy thereof of the substrate by means of oxygen-M bonds, wherein M is as explained hereinabove.

According to a second aspect of the invention, there is disclosed an article comprising a substrate and a coloured abrasion resistant coating present on at least part of a surface of the substrate as set out in the appended claims.

The substrate is as described hereinabove, i.e. the substrate comprises a metallic element and/or an alloy of a metallic element, and/or a polymer.

The coloured abrasion resistant coating is a cross-linked inorganic organic hybrid coating comprising at least one functional group R¹. Advantageously, R¹ comprises one or more functional groups selected from the group consisting of C₁-C₂₀ alkyl, C₁-C₂₀ cycloalkyl, C₁-C₁₀ aryl, amide, amine, ether, mercapto (i.e. thiol), (meth)acrylate, and epoxy. Preferred functional groups are selected from the group consisting of C₁-C₂₀ alkyl, C₁-C₂₀ cycloalkyl, C₁-C₁₀ aryl and epoxy.

Optionally, R¹ comprises at least one halogen atom. Advantageously, the halogen atom is fluorine, chlorine, bromine, or iodine. When R¹ comprises two or more halogen atoms, they can be the same or different, i.e. a combination of two or more of fluorine, chlorine, bromine, and iodine. The abrasion resistant coating further comprises silicon and/or titanium. The cross-linked inorganic organic hybrid coating is covalently bonded to the substrate by means of oxygen-silicon bonds or oxygen-titanium bonds, respectively.

According to an embodiment, R¹ is a group comprising an epoxy functional group.

According to another embodiment, R¹ is a C₁-C₂₀ alkyl, i.e. an alkyl having between 1 and 20 carbon atoms in its chain. Advantageously, when R¹ comprises a halogen atom, R¹ is a C₁-C₂₀ alkyl having the formula - (CH₂)ₓ(CF₂)_{y}CF₃, wherein x is between 0 and z-1, y is z-x-1, and z is the total number of carbon atoms, i.e. z is between 1 and 20. For example, when R¹ is C₈ alkyl, i.e. z is 8, it can have the formula -(CH₂)₂(CF₂)₅CF₃ (x being 2 and y being 5).

The cross-linked inorganic organic hybrid coating comprises a colorant. The colorant is advantageously as described hereinabove.

The coloured abrasion resistant coating advantageously has an abrasion resistance of at most 15 %, preferably at most 10 %, for example at most 5 %. Advantageously, the abrasion resistance is measured according to ASTM D1044 (also known as Taber abrasion). Advantageously, the abrasion resistance is measured according to ASTM D1044 by applying a load of 500 g. Advantageously, the abrasion resistance is expressed as (i.e. the abrasion resistance value in percent stands for) the haze that is measured after 100 revolutions.

Advantageously, when the substrate comprises a metallic element and/or an alloy of a metallic element, the coloured abrasion resistant coating present on at least part of a surface of the substrate is further corrosion inhibiting.

In the light of the present disclosure, "a corrosion inhibiting coating" means that the presence of the coating on a substrate reduces, and advantageously avoids, the formation of corrosion on the areas of the surface of the substrate comprising such a coating.

Advantageously, the article of the present disclosure includes components of watches, clocks and jewellery. Advantageously, the article is a (coloured) watch component.

According to a third aspect of the invention, there is disclosed a use of a method of the first aspect as set out in the appended claims. Advantageously, the method is used for obtaining a coloured watch component.

Advantages of the methods of the present disclosure include, without being limited thereto, the possibility to apply a coloured coating to a wide range of substrates, wherein the coloured coating can have multiple characteristics of properties, such as, without being limited thereto, abrasion resistance, excellent adhesion to the substrate, and corrosion resistance. A further advantage is that the methods of the present disclosure allow to provide coatings in different colours, as well as opaque, transparent or translucent coatings. The methods allow to vary the saturation of the colour. Yet another advantage is that the methods are particularly suited to apply a coloured coating to substrates having a complex geometry in a homogeneous way. Coating thickness can be well controlled so that the thickness stays within the tolerances.

### Brief description of the figures

Aspects of the invention will now be described in more detail with reference to the appended drawings, wherein same reference numerals illustrate same features and wherein:
- Figure 1 schematically represents the steps of a method according to the present disclosure,
- Figure 2 shows an article obtained by a method according to the present disclosure,
- Figure 3 shows an article obtained by a further method according to the present disclosure.

### Detailed description of the invention

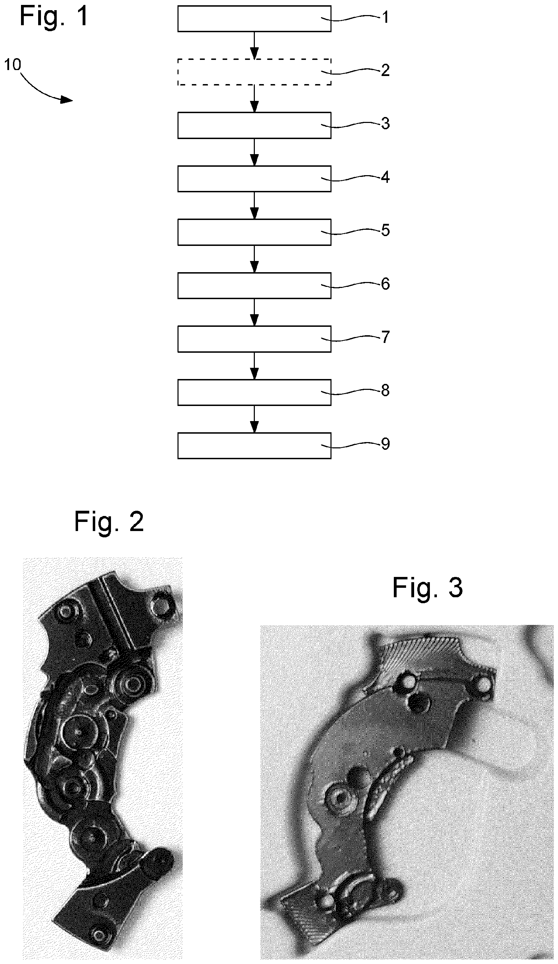

Figure 1 schematically shows the steps of a method according to the present disclosure. The method 10 comprises the step of providing a substrate 1.

Advantageously, the substrate comprises or substantially consists of a metallic element and/or an alloy of a metallic element. Non-limiting examples of the metallic element include iron, copper, aluminium, zinc, silver, gold, tin, manganese, and nickel. The substrate can comprise two or more metallic elements and/or alloys thereof.

Advantageously, the substrate comprises or substantially consists of copper or a copper alloy, such as brass or bronze. Alternatively and advantageously, the substrate comprises iron or an iron alloy, such as steel, for example stainless steel or carbon steel.

With "substantially consisting" is meant in the present invention that the amount of impurities or other components present in the substrate is advantageously below 1 % by weight, preferably below 0.5 % by weight, more preferably below 0.1 % by weight, such as below the detection limit of analysis techniques used to determine the composition, such as X-ray photoelectron spectroscopy (XPS).

Alternatively or additionally, and advantageously, the substrate comprises a polymer or a combination of polymers, including copolymers. Non-limiting examples of polymers and copolymers include polyethylene, polypropylene, polyester (e.g. PBT or PET), polyamide (e.g. PA6, PA6-6), polyimide, polyamide-imide, polystyrene, polytetrafluoroethylene (PTFE), polyurethane, polymethyl methacrylate, polycarbonate, and methacrylate acrylonitrile butadiene styrene (MABS).

Optionally, the substrate can comprise further additives. Such additives can be additives known in the art, such as fillers or flame-retardants.

The method further comprises the provision of a first compound 3 according to formula (I), wherein formula (I) is 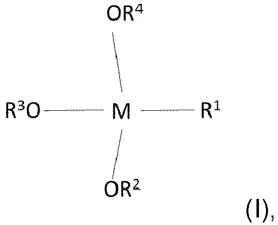 wherein
M is silicon or titanium,
R¹ is a group comprising one or more functional groups selected from the group consisting of C₁-C₂₀ alkyl, C₁-C₂₀ cycloalkyl, C₁-C₁₀ aryl, amide, amine, mercapto, (meth)acrylate, and epoxy, and
R², R³, R⁴, R⁶, R⁷, and R⁸ are each independently from each other H, a C₁-C₂₀ alkyl, a C₁-C₁₀ aryl, C₁-C₂₀ alkenyl, C₁-C₂₀ alkylaryl, or C₁-C₂₀ arylalkyl.

Advantageously, R¹ comprises or consists of one or more functional groups selected from the group consisting of C₁-C₂₀ alkyl, C₁-C₂₀ cycloalkyl, C₁-C₁₀ aryl, amide, amine, ether, mercapto (i.e. thiol), (meth)acrylate, and epoxy. Preferred functional groups are selected from the group consisting of C₁-C₂₀ alkyl, C₁-C₂₀ cycloalkyl, C₁-C₁₀ aryl and epoxy.

Optionally, R¹ comprises at least one halogen atom. Advantageously, the halogen atom is fluorine, chlorine, bromine, or iodine. When R¹ comprises two or more halogen atoms, they can be the same or different, i.e. a combination of two or more of fluorine, chlorine, bromine, and iodine.

Advantageously, "C₁-C₂₀ alkyl" includes alkyl functional groups comprising between 1 and 20 carbon atoms in the chain. Advantageously, the C₁-C₂₀ alkyl is C₁-C₁₂ alkyl, preferably C₁-C₁₀ alkyl, such as C₁-C₈ alkyl, C₁-C₆ alkyl, or C₁-C₄ alkyl.

Advantageously, "C₁-C₂₀ cycloalkyl" includes cycloalkyl functional groups comprising in total between 1 and 20 carbon atoms in the chain.

Advantageously, "C₁-C₁₀ aryl" includes aryl functional groups comprising between 1 and 10 carbon atoms in the chain. For example, R¹ can comprise a phenyl functional group, or can be C₁-C₂₀ alkyl phenyl.

Advantageously, when R¹ comprises an amide functional group, R¹ has the formula -(CH₂)ₐC(O)NH₂, wherein a is between 0 and 20, preferably between 1 and 10, such as between 2 and 8, between 2 and 6, or between 2 and 4, such as 2, 3 or 4. Optionally, one or more hydrogen atoms of one or more methyl groups (i.e. the CH₂-groups) are replaced by a halogen atom. Advantageously, the halogen atom is fluorine.

Advantageously, when R¹ comprises an amine functional group, R¹ has the formula -(CH₂)ₚNH₂, wherein p is between 1 and 20, preferably between 1 and 10, such as between 1 and 8, between 1 and 6, or between 1 and 4, such as 1, 2, 3 or 4. Optionally, one or more hydrogen atoms of one or more methyl groups (i.e. the CH₂-groups) are replaced by a halogen atom. Advantageously, the halogen atom is fluorine.

Advantageously, when R¹ comprises a mercapto (thiol) functional group, R¹ has the formula -(CH₂)ᵤSH, wherein u is between 1 and 20, preferably between 1 and 10, such as between 1 and 8, between 1 and 6, or between 1 and 4, such as 1, 2, 3 or 4. Optionally, one or more hydrogen atoms of one or more methyl groups (i.e. the CH₂-groups) are replaced by a halogen atom. Advantageously, the halogen atom is fluorine.

Advantageously, when R1 comprises a (meth)acrylate functional group, R¹ has the formula -(CH₂)_{b}OC(O)CXCH₂, wherein X is H when R¹ is an acrylate functional group and CH3 when R¹ is a methacrylate functional group, and b is between 1 and 20, preferably between 2 and 12, for example between 3 and 10, or between 4 and 8. Optionally, one or more hydrogen atoms of one or more methyl groups (i.e. the CH₂-groups) are replaced by a halogen atom. Advantageously, the halogen atom is fluorine.

Advantageously, R¹ comprises or substantially consists of an epoxy functional group (i.e. an oxirane functional group). For example, R¹ can be an alpha-epoxy or 1,2-epoxy, which comprises a three-member ring structure.

Alternatively, R¹ can comprise or substantially consist of C₁-C₂₀ alkyl according to formula (III)

-(CH₂)ₓ(CF₂)_{y}CF₃ (III)

wherein
x is between 0 and z-1,
y is z-1-x, and
z is the number of carbon atoms in the chain, and is between 0 and 20.

For example, R¹ can be -(CH₂)₂(CF₂)₅CF₃, i.e. z is 8, x is 2 and y is 5. For example, R¹ can be -(CH₂)₅CF₃, i.e. z is 6, x is 5 and y is 0.

R¹ can be a C₁-C₂₀ perfluoroalkyl, i.e. an alkyl wherein all hydrogen atoms are replaced by fluorine atoms, according to -(CF₂)_{y}CF₃, i.e. wherein in formula (III) x is 0, y is z-1, and z is between 1 and 20. For example, R¹ can be a C₈ perfluoroalkyl, i.e. -(CF₂)₇CF₃ (z = 8, x = 0 and y = 7 in formula (III)), a C₆ perfluoroalkyl, i.e. -(CF₂)₅CF₃ (z = 6, x = 0 and y = 5 in formula (III)), or a C₄ perfluoroalkyl, i.e. -(CF₂)₃CF₃ (z = 4, x = 0 and y = 3 in formula (III)).

R¹ can be a functional group imparting water- and oil-repellent properties to the coloured abrasion resistant coating. Advantageously, when R¹ is a water-and oil-repellent functional group, R¹ provides corrosion protection or corrosion inhibition to the substrate as well. However, the inventors have surprisingly noted that R¹ does not need to be water- and oil-repellent in order to provide corrosion protection or corrosion inhibition to the substrate.

Advantageously, when R¹ is a water-and oil-repellent functional group, R¹ comprises at least one halogen atom. Advantageously, the halogen atom is fluorine, chlorine, bromine, or iodine. When R¹ comprises two or more halogen atoms, they can be the same or different, i.e. a combination of two or more of fluorine, chlorine, bromine, and iodine.

The method further comprises the provision of a second compound 4 according to formula (II), wherein formula (II) is 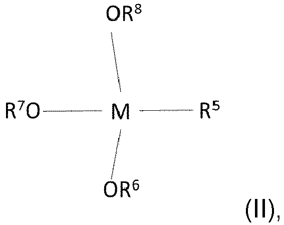 wherein
M is silicon or titanium,
R⁵ is a cross-linkable functional group, and
R⁶, R⁷, and R⁸ are each independently from each other H, a C₁-C₂₀ alkyl, a C₁-C₁₀ aryl, C₁-C₂₀ alkenyl, C₁-C₂₀ alkylaryl, or C₁-C₂₀ arylalkyl.

Advantageously, R⁵ is a functional group selected from the group consisting of an epoxy, a (meth)acrylate, an ester, a mercapto, a vinyl, and a (meth)acrylated urethane. Preferred functional groups are selected from the group consisting of a (meth)acrylate, an ester, a mercapto, a vinyl, and a (meth)acrylated urethane.

Advantageously, R¹ and R⁵ are different, i.e. the first compound and the second compound are advantageously different.

Advantageously, the first compound and the second compound are hydrolysed 5 and condensed 6, thereby obtaining a pre-polymer.

The method further comprises adding a colorant 7 to the pre-polymer. Advantageously, the colorant is a pigment or a dye.

Advantageously, the colorant dissolves at least partially in the pre-polymer. Alternatively, the colorant is at least partially dispersed in the pre-polymer, i.e. a dispersion comprising the pre-polymer and the colorant is obtained.

Optionally, further components or substances can be added to the pre-polymer. For example, a surfactant can be added to the pre-polymer. Advantageously, when a surfactant is added, it is added in an amount between 0.5 % and 30 % by weight, based on the total weight of the pre-polymer.

Advantageously, the pre-polymer comprising the colorant is applied 8 to at least a part of a surface of the substrate. Various application methods known in the art can be used. A preferred method comprises immersing the substrate into the pre-polymer, thereby contacting (the part of) the surface of the substrate to which the pre-polymer is to be applied with the pre-polymer. The substrate can be immersed in the pre-polymer by means of dipping the substrate in the pre-polymer.

The method further comprises cross-linking 9 of the pre-polymer, thereby obtaining a coloured abrasion resistant coating on the substrate. Advantageously, the pre-polymer is cross-linked by means of cross-linking of the cross-linkable functional group R⁵.

When R⁵ is a thermo-cross-linkable functional group, the cross-linking is advantageously induced and/or performed by exposing the pre-polymer to a temperature up to 250 °C, advantageously a temperature between 25 °C and 250 °C, preferably between 30 °C and 200 °C, more preferably between 40 °C and 150 °C, such as between 50 °C and 100 °C.

When R⁵ is a photo-cross-linkable functional group, the cross-linking is advantageously induced and/or performed by exposing the pre-polymer to radiation. Advantageously, the radiation is IR radiation or UV radiation, or a combination thereof.

When R⁵ is a thermo-cross-linkable and a photo-cross-linkable functional group, the cross-linking is advantageously induced and/or performed by exposing the pre-polymer to a temperature up to 250 °C and to radiation.

Optionally, the substrate can be pre-treated 2 prior to applying 8 the pre-polymer to at least a part of a surface of the substrate. Advantageously, at least (the part of) the surface of the substrate to which the pre-polymer will be applied is pre-treated.

Advantageously, the pre-treatment comprises a cleaning of at least (a part of) the surface of the substrate (a so-called pre-cleaning). The pre-cleaning can be performed by methods known in the art. Non-limiting examples include grinding and polishing, chemical cleaning, ultrasonic cleaning, sandblasting, plasma treating at atmospheric pressure or at reduced pressure, or corona treating (air plasma), or an alkaline treatment. Advantageously, an alkaline treatment, e.g. alkaline pre-cleaning, comprises washing the surface with a solution having a pH between 7 and 14. For example, the alkaline treatment can comprise washing the surface with alkaline water, such as alkaline water having a pH between 8 and 9. The inventors have discovered that a pre-treatment comprising an alkaline treatment allows to improve the adhesion of the coloured coating to the substrate.

Alternatively or additionally, and advantageously, the pre-treatment comprises deposition of silicon oxide onto at least the part of the surface of the substrate onto which the pre-polymer will be applied. The silicon oxide can be deposited by means of methods known in the art, for example by means of combustion chemical vapour deposition.

The inventors have discovered that the deposition of silicon oxide onto the surface of the substrate prior to application of the pre-polymer allows to improve the adhesion of the coloured coating to the substrate. Such a pre-treatment also allows to obtain a more uniform coverage of the surface of the substrate to which the pre-polymer is applied. This is in particular an advantage when the substrate has a more complex geometrical shape and/or a textured (e.g. patterned) surface, compared to traditional methods wherein the coating deposition or formation is rather non-homogeneous for more complex substrates.

Advantageously, the coloured abrasion resistant coating is an inorganic organic hybrid coating. Advantageously, the coloured abrasion resistant coating is a cross-linked inorganic organic hybrid coating.

Advantageously, the coloured abrasion resistant coating is at least partially covalently bonded to the surface of the substrate.

The inventors have surprisingly discovered that when the coloured abrasion resistant coating is produced from a first compound comprising a functional group selected from the group consisting of C₁-C₂₀ alkyl, C₁-C₂₀ cycloalkyl, C₁-C₁₀ aryl and epoxy, and a second compound comprising a functional group selected from the group consisting of a (meth)acrylate, an ester, a mercapto, a vinyl, and a (meth)acrylated urethane (i.e. from two different compounds), the coloured abrasion resistant coating has an excellent adhesion to the surface of the substrate. The inventors believe that the excellent adhesion is realised from the covalent bonds which are formed between the coating and the substrate.

Without wishing to be bound to any theory, the inventors believe that this excellent adhesion is obtained by a combination of the functional groups of both components, and the conditions in which the method is performed, in particular the crosslinking via the functional group of the second compound and the condensation of the hydrolysed first and second compounds together.

In other words, the methods of the present disclosure allow for obtaining an excellent adhesion without the need for additional adhesion promoting compounds, such as monomers, polymers and oligomers, optionally having polymerisable functional groups.

Advantageously, the coloured abrasion resistant coating is covalently bonded to the substrate by oxygen-comprising bonds.

When the substrate comprises a metallic element, the coloured abrasion resistant coating is advantageously at least partially covalently bonded to the metallic element. When the substrate comprises an alloy of a metallic element, the coloured abrasion resistant coating is advantageously at least partially bonded to the metallic element comprised in the alloy. Advantageously, the coloured abrasion resistant coating is covalently bonded to the metallic element by oxygen-comprising bonds, such as oxygen-atoms of the coating covalently bonded to the metallic element. Advantageously, when the cross-linked inorganic organic hybrid coating comprises silicon and/or titanium, the coating is at least partially covalently bonded to the metallic element of the substrate by silicon-oxygen-metallic element and/or titanium-oxygen-metallic element bonds, respectively.

When the substrate comprises a polymer, the coloured abrasion resistant coating is advantageously at least partially covalently bonded to the polymer. Advantageously, the coloured abrasion resistant coating is covalently bonded to the polymer of the substrate by oxygen-comprising bonds, such as oxygen-atoms of the coating covalently bonded to the polymer.

Advantageously, the cross-linked inorganic organic hybrid coating further comprises carbon-silicon bonds.

The coloured abrasion resistant coating can be transparent, translucent (i.e. semi-transparent) or opaque. Advantageously, the coloured coating can have a saturation of the colour, i.e. a depth of colour, which is varied based on the final application of the article.

Advantageously, the saturation and the degree of transparency (varying between transparent and opaque) can be varied by varying the type and/or the amount of colorant added to the pre-polymer and/or the thickness of the coating.

Advantageously, the coating has a thickness between 1 µm and 20 µm, preferably between 1.2 µm and 10 µm, such as between 1.5 µm and 5 µm. As will be understood, the optimal coating thickness depends, amongst others, on the substrate, in particular its composition and shape, on the required saturation and transparency of the coating, and on the intended use of the article.

The abrasion resistance can be measured according to methods known in the art. Advantageously, and in particular, the abrasion resistance is measured according to ASTM D1044 (so-called Taber abrasion). Abrasion resistance according to ASTM D1044 is tested by using abrasive wheels, such as rubber wheels having alumina particles embedded therein. A load having a weight of 250 g, 500 g or 1000 g is then placed on top of the abrasive wheel(s). Advantageously, in the light of the present disclosure, the abrasion resistance is measured according to ASTM D1044 by applying a load of 500 g.

According to ASTM D1044, the abrasion resistance is expressed as (i.e. the abrasion resistance value in percent stands for) the haze that is measured after a predetermined number of revolutions, for example, without being limited thereto, 20, 25, 50, 75, 100, 150, 200 or 250 revolutions. As will be understood, the load applied and the number of revolutions depends on the substrate that is to be tested, and in particular on the intended use of the substrate. Low haze values, i.e. below 10 %, are in the light of the present disclosure considered as an indication of high abrasion resistance.

Advantageously, the haze is measured by transmitting or reflecting light. As will be understood, whether light is transmitted or reflected depends on the substrate to be analysed. For example, the haze on an abraded transparent substrate will be measured by transmitting light (transmitting mode), whereas an opaque substrate will be measured by reflecting light (reflectance mode).

Advantageously, the article of the present disclosure has an abrasion resistance of at most 10 %, such as at most 7.5 %, preferably at most 5 %, measured according to ASTM D1044 after 100 revolutions and an applied load of 500 g.

Depending on the functional group R¹, the coating can provide the substrate with further characteristics. For example, when R¹ is a water- and oil-repellent functional group, the coating can render the substrate easy-to-clean and/or can provide corrosion inhibition or protection to the substrate, i.e. can provide an article that is easy-to-clean and/or that is corrosion resistant.

The inventors have surprisingly discovered that when the coloured abrasion resistant coating is produced according to methods of the present disclosure, and thus from a first compound comprising a functional group selected from the group consisting of C₁-C₂₀ alkyl, C₁-C₂₀ cycloalkyl, C₁-C₁₀ aryl and epoxy, and a second compound comprising a functional group selected from the group consisting of a (meth)acrylate, an ester, a mercapto, a vinyl, and a (meth)acrylated urethane (i.e. from two different compounds), the coating has excellent abrasion resistance properties.

Without wishing to be bound to any theory, the inventors believe that this excellent abrasion resistance is the result of (at least) the excellent adhesion of the coating to the substrate, which, as explained hereinabove, is believed to be obtained by a combination of the functional groups of both components, and the process conditions applied, in particular the crosslinking via the functional group of the second compound and the condensation of the hydrolysed first and second compound together.

### Examples

### Example 1

Brass (copper alloy) substrates were pre-treated by grinding, polishing and an alkaline treatment. A first substrate was a disk having a flat, smooth surface without texture onto which the coating was to be applied. A second substrate was a substrate having several sides and edges, as well as textured areas at the edges. In other words, the first substrate can be considered a substrate having a simple geometry, while the second substrate has a more complex geometry.

A pre-polymer having the composition of Table 1 was prepared from a first compound comprising as R¹ -(CF₂)₅CF₃ and a second compound comprising as R⁵ a vinyl functional group. 15% by weight of carbon black as colorant was dispersed into the pre-polymer. The carbon black was added as particles having an average size of 25 nm. The dispersion of the carbon black particles was performed by using a high speed dissolver, operated at 5000 rpm for 15 minutes, followed by an ultrasonic treatment for 15 minutes. A surfactant comprising a copolymer with pigment affinic groups was also added to the pre-polymer. A black soluble dye was further added as well. The black soluble dye was added to obtain an opaque coloured coating.

The pre-polymer comprising the carbon black was applied to the pre-treated brass substrates (i.e. the first and the second substrates) by immersing the brass substrates into the pre-polymer. Different amounts of pre-polymer were applied to both the first and the second substrate to obtain coatings having different thicknesses. After removing the brass substrates from the pre-polymer, the pre-polymer present on the brass was cross-linked by thermally curing the substrate at 160 °C for 2 hours.

A first coating had a thickness of 3.0 - 4.0 µm and was opaque and slightly glossy. A second coating had a thickness of 5.0 - 6.0 µm and was also slightly glossy and opaque. Visual inspection showed a black colour having a homogeneous saturation. A very uniform coverage of the surfaces of the first substrate (disk) was obtained for both coating thicknesses. However, a less uniform result was obtained on the second substrate, where at the textured edges the coating was less homogeneous than on the larger, flat surface areas of the substrate (Figure 2). This effect was noticed for both coating thicknesses.

**Table 1: coating composition**

| **Solid content of pre-polymer** | **Carbon black particles** | **Black soluble dye** | **Surfactant** |
|---|---|---|---|
| 25 % | 15 % | 6 % | 3 % |

The abrasion was tested according to ASTM D1044. A load of 500 g was applied to the abrasive wheel, and 100 revolutions were performed. The haze was measured after 100 revolutions. The haze was measured in reflection mode, as brass is not transparent. Both coated substrates had an excellent abrasion resistance (haze value) of only 1.5% to 2 %, independent on the coating thickness.

The anti-corrosion properties of the articles was also tested. The coated substrates were exposed to a relative humidity of 92 °C at 50 °C for 7 days. Visual inspection afterwards showed no changes in the black brass articles in terms of colour changes, and no stains were observed on the surface.

The adhesion of the coatings was tested on the black articles which had been exposed to a relative humidity of 92 °C at 50 °C for 7 days. The adhesion was tested according to ASTM 3359-95A. The adhesion was very good and no delamination at the edges was noticed.

### Example 2

The second brass substrate of example 1 (complex geometry) was pre-treated according to example 1, followed by deposition of SiO₂. The SiO₂-brass samples were then coated with the coatings and by means of the method as in example 1. The coatings were again very homogeneous in terms of saturation and were opaque. As shown in figure 3, the coverage of the surface of the second substrate was now homogeneous and uniform all over the substrate, including at the textured edges. This demonstrates the advantage of a SiO₂ deposition as pre-treatment on substrates having a more complex geometry and/or a textured surface.

The adhesion of the coatings was tested, again after exposure of the articles to a relative humidity of 92 °C at 50 °C for 7 days. The adhesion was tested according to ASTM 3359-95A. The adhesion was very good and no delamination at the edges was noticed.

### Example 3

Transparent polymer plates consisting of methyl methacrylate acrylonitrile butadiene styrene (MABS polymer) were coated by dipping the plates in 5 different pre-polymers at a speed of 100 mm/min. 1.5 % by weight of Orasol Blue for a the solid content of the coating of 30 % was added as blue colorant to the pre-polymer. One sample was cured at 95 °C for 1 hour (sample 1), 4 samples (samples 2-5) were cured by means of UV radiation for 10 seconds.

The adhesion of the samples was tested according to ASTM 3359-95A, and showed an adhesion of 100% (no delamination noticed). In other words, 0 % of the coating in the area of testing was removed (also known as classification 5B).

The coloured coatings on the samples were clear, transparent and glossy for samples 1 and 2, partially matte and hazy on sample 3, and slightly matte for samples 4 and 5.

The abrasion resistance was tested according to ASTM D1044. A load of 500 g was applied to the abrasive wheel, and 100 revolutions were performed. The haze after 100 revolutions was measured, in transmission mode. All samples showed an abrasion resistance between 1.5 % and 5 %.

### Comparative example

A reference pre-polymer was prepared from a first compound comprising as R¹ an amino group and a second compound comprising as R⁵ an allyl functional group. 1.5 % by weight of Orasol Blue for a the solid content of the coating of 30 % was added as blue colorant to the pre-polymer.

Transparent polymer plates consisting of methyl methacrylate acrylonitrile butadiene styrene (MABS polymer) were coated by dipping the plates in the pre-polymer at a speed of 100 mm/min. One sample was cured at 95 °C for 1 hour. A second sample was cured by means of UV radiation for 10 seconds.

The adhesion of the samples was tested according to ASTM 3359-95A, and showed an adhesion of classification 2B (15 % to 35 % of the coating in the area of testing was removed) to 4B (less than 5 % of the coating in the area of testing was removed).

The abrasion resistance was tested according to ASTM D1044. A load of 500 g was applied to the abrasive wheel, and 100 revolutions were performed. The haze after 100 revolutions was measured in transmission mode. All samples showed an abrasion resistance between 11 % and 20 %.

### Nomenclature

1. provision of a substrate
2. optional pre-treatment of the substrate
3. provision of a first compound
4. provision of a second compound
5. hydrolysis
6. condensation
7. adding a colorant
8. applying to the substrate
9. cross-linking
10. method

## Claims

1. A method (10) for producing an article comprising a substrate and a coloured abrasion resistant coating present on at least part of a surface of the substrate, the method comprising:
- providing a substrate (1), wherein the substrate comprises a metallic element and/or an alloy of a metallic element, and/or a polymer,
- providing a first compound according to formula (I) (3) and a second compound according to formula (II) (4), 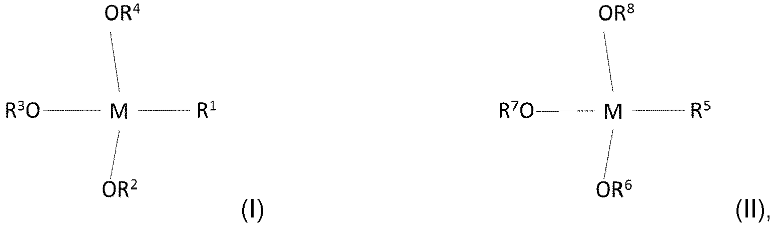 wherein
M is silicon or titanium,
R¹ is a group comprising one or more functional groups selected from the group consisting of C₁-C₂₀ alkyl, C₁-C₂₀ cycloalkyl, C₁-C₁₀ aryl and epoxy, and optionally comprises at least one halogen atom,
R⁵ is a cross-linkable functional group selected from the group consisting of a (meth)acrylate, an ester, a mercapto, a vinyl, and a (meth)acrylated urethane,
R², R³, R⁴, R⁶, R⁷, and R⁸ are each independently from each other H, a C₁-C₂₀ alkyl, a C₁-C₁₀ aryl, C₁-C₂₀ alkenyl, C₁-C₂₀ alkylaryl, or C₁-C₂₀ arylalkyl,
- hydrolysing (5) the first compound and the second compound in the presence of water,
- condensing (6) the hydrolysed first compound and the hydrolysed second compound, thereby obtaining a pre-polymer comprising R¹ and R⁵ as functional groups,
- adding (7) a colorant to the pre-polymer,
- applying (8) the pre-polymer comprising the colorant to at least part of a surface of the substrate, and
- inducing cross-linking (9) of the cross-linkable functional group R⁵ by exposing the pre-polymer comprising the colorant to one or more of a temperature up to 250 °C, UV radiation or IR radiation, thereby obtaining an article comprising a substrate and a coloured abrasion resistant coating covering at least part of a surface of the substrate,
**characterized in that** the coloured abrasion resistant coating is a cross-linked inorganic organic hybrid coating comprising at least one functional group R¹, and that the cross-linked inorganic organic hybrid coating is covalently bonded to the substrate.

2. Method (10) for producing an article according to claim 1, wherein the colorant is at least partially dissolved or dispersed in the pre-polymer.

3. Method (10) for producing an article according to any one of the preceding claims, wherein the colorant comprises one or more of carbon black, copper(II) phthalocyanine, or a triphenyl methane based colorant.

4. Method (10) for producing an article according to any one of the preceding claims, wherein the colorant is a particulate compound, wherein the particles have an average diameter of 250 nm or less, preferably 100 nm or less.

5. Method (10) for producing an article according to any one of the preceding claims, wherein the pre-polymer comprising the colorant comprises between 0.5 % and 30 % by weight of the colorant, based on the total weight of the pre-polymer comprising the colorant.

6. Method (10) for producing an article according to any one of the preceding claims, wherein R¹ is a group comprising an epoxy functional group.

7. Method (10) for producing an article according to any one of claims 1 to 5, wherein R¹ is -(CH₂)ₓ(CF₂)_{y}CF₃, wherein x is between 0 and z-1, y is z-x-1, and z is the number of carbon atoms and is between 1 and 20.

8. Method (10) for producing an article according to any one of the preceding claims, wherein R², R³, R⁴, R⁶, R⁷, and R⁸ are each independently from each other C₁-C₈ alkyl, preferably C₁-C₄ alkyl.

9. Method (10) for producing an article according to any one of the preceding claims, wherein the substrate is pre-treated (2) by means of deposition of silicon oxide prior to applying (8) the pre-polymer comprising the colorant to at least part of a surface of the substrate.

10. An article comprising a substrate and a coloured abrasion resistant coating present on at least part of a surface of the substrate, wherein the substrate comprises a metallic element and/or an alloy of a metallic element, and/or a polymer, wherein the coloured abrasion resistant coating is a cross-linked inorganic organic hybrid coating comprising at least one functional group R¹, wherein R¹ is a group comprising one or more functional groups selected from the group consisting of C₁-C₂₀ alkyl, C₁-C₂₀ cycloalkyl, C₁-C₁₀ aryl and epoxy, optionally comprising at least one halogen atom,
**characterized in that** the cross-linked inorganic organic hybrid coating comprises a colorant, that the cross-linked inorganic organic hybrid coating comprises silicon and/or titanium, that the cross-linked inorganic organic hybrid coating is covalently bonded to the substrate by means of oxygen-silicon bonds or oxygen-titanium bonds, respectively, and that the article has an abrasion resistance of at most 5 %, wherein the abrasion resistance is measured according to ASTM D1044 and expressed as the haze after 100 revolutions at a 500 gram load.

11. Article according to claim 10, wherein R¹ is a group comprising an epoxy functional group.

12. Article according to claim 10, wherein R¹ is -(CH₂)ₓ(CF₂)_{y}CF₃, wherein x is between 0 and z-1, y is z-x-1, and z is the number of carbon atoms and is between 1 and 20.

13. Article according to any one of claims 10 to 12, wherein the substrate comprises a metallic element and/or an alloy of a metallic element, and wherein the coloured abrasion resistant coating present on at least part of a surface of the substrate is corrosion inhibiting.

14. Article according to any one of claims 10 to 13, wherein the article is a coloured watch component.

15. Use of a method (10) according to any one of claims 1 to 9, for obtaining a coloured watch component.
